# EUROPÄISCHE PATENTSCHRIFT

(11) **EP 0 396 922 B1**
(45) Veröffentlichungstag und Bekanntmachung des Hinweises auf die Patenterteilung: **29.12.1993**
(21) Anmeldenummer: 90106883.3
(22) Anmeldetag: 10.04.1990
(51) Int. Cl.: B29C 47/92

(54) **Vorrichtung zum Steuern von Anlagen zur Behandlung von in Extrudern und/oder Kalandern der Kautschuk- und/oder Kunststoffverarbeitung hergestellten strangförmigen Erzeugnissen**
Device for controlling plants treating rope formed articles manufactured by extruders and/or calenders for processing rubber and/or plastics
Dispositif pour commander des installations à traiter des produits sous forme de boyaux fabriqués dans des extrudeuses et/ou des calandres à usiner du caoutchouc et/ou des matières plastiques

(30) Priorität: 10.05.1989 DE 3915279
(43) Veröffentlichungstag der Anmeldung: 14.11.1990
(73) Patentinhaber: PAUL TROESTER MASCHINENFABRIK, D-30519 Hannover (DE)
(72) Erfinder: Pohl, Hans-Joachim, Dipl.-Ing., D-3000 Hannover (DE)
(74) Vertreter: Junius, Walther, Dr.

## Beschreibung

Die Erfindung betrifft eine Vorrichtung zur Geschwindigkeitsregelung von Anlagen zur Behandlung von in Extrudern und/oder Kalandern der Kautschuk- und/oder Kunststoffverarbeitung hergestellten strangförmigen Erzeugnissen, die über mit unterschiedlichen Geschwindigkeiten angetriebene Transportstrecken laufen, bestehend aus mindestens einer am Ende von einer oder zwischen zwei Transportstrecken angeordneten, einen Lagegeber verstellenden, gewichtsentlasteten, mit einer an dem strangförmigen Erzeugnis anliegenden Tastrolle versehenen, um eine Welle verschwenkbaren Taster und einer dem Lagegeber nachgeschalteten Steuerungsvorrichtung für den Antrieb der Transportstrecke.

In Extrudern und/oder Kalandern hergestellte strangförmige Erzeugnisse werden nach ihrer Ausformung über Transportstrecken geleitet, auf denen sie einer weiteren Behandlung ausgesetzt werden. Diese weitere Behandlung kann ein einfacher Abkühlprozeß sein, es können aber auch Vulkanisations- oder Vernetzungsprozesse sein, Trocknungsprozesse und anderes mehr. Während dieser Behandlung erfahren die strangförmigen Erzeugnisse Längenänderungen, meist Schrumpfungen, die durch die Behandlung ausgelöst werden. Diese Längenänderungen hängen von vielerlei Parametern ab und sind steuerungstechnisch nur außerordentlich schwer, meist überhaupt nicht, in den Griff zu bekommen. Die den Extrudern und/oder Kalandern nachgeschalteten Transportstrecken werden daher in ihrer Transportgeschwindigkeit entsprechend sich an Umlenkstellen bildenden und zu einer Schleife geometrisch sich ausbildenden Erzeugnisüberschüssen oder -unterschüssen gesteuert.

Zur Feinsteuerung der verfahrenstechnisch bedingten sehr kleinen Geschwindigkeitsunterschiede zwischen den einzelnen Transportstrecken dienen dabei Sensoren, z.B. Lichtschranken, Lichtbänder, Annäherungsschalter und dergleichen sowie seit langer Zeit auch mit verschwenkbaren Tastern, die aus einer Welle mit mindestens einem Tragarm für eine Tastrolle bestehen. Da diese mit Tastrollen versehenen verschwenkbaren Taster entsprechend dem sich bildenden Längenüberschuß oder -unterschuß sich ständig hin und her bewegen, werden sie "Tänzer" genannt.

Diese Tänzer genannten Taster können sehr leichtgängig gelagert werden. Sie müssen allerdings aus Gründen der Anlagen-Robustheit und wegen der notwendigen Betriebssicherheit entsprechend der Art der kontinuierlich durchlaufenden erzeugten Stränge eine gewisse Festigkeit und vor allem auch Steifigkeit aufweisen, was die Masse des Tänzers manchmal größer macht als es aus reglungstechnischen Gründen erwünscht ist. Theoretisch ideal wäre in den meisten Fällen ein fast masseloser Taster. Es ist deshalb oft versucht worden, die Tastrolle in ihren Schwenkarmen so auszutarieren, daß nur minimale Andruckkräfte, die zumeist auch einstellbar sind, an der Tastrolle auftreten. Dieses erfolgt, um nur eine ganz geringfügige Belastung des erzeugten und in Behandlung befindlichen Stranges zu erreichen, um eine Beeinträchtigung der Schrumpfung oder gar eine Streckung des erzeugten Stranges zu vermeiden.

Grundsätzlich muß die optimale Tänzereinstellung etwa "mittig" sein, d.h. eine Veränderung ins Schnelle und ins Langsame ausregeln können. Praktisch wird diese Tänzereinstellung nur in völlig ausgeregeltem Zustand vorliegen und bei jedem Fehlerimpuls verlassen, bis dieser ausgeregelt ist. Ein Problem besteht darin, daß sich die Optimaleinstellung geschwindigkeitsbedingt ändert und sich erst nach einiger Betriebszeit auf den Sollwert der Grundgeschwindigkeit einpendelt, nämlich nach Erreichen der vollen Leistung.

Die Inbetriebsetzung einer Herstellungsanlage von strangförmigen Erzeugnissen erfolgt zumeist nicht mit der vollen Betriebsgeschwindigkeit, sondern erst mit geringerer Geschwindigkeit, was anlagenbedingt ist und in den meisten Fällen auch notwendig ist, um den erzeugten Anfang des Extrusionsstranges in die einzelnen Teile der Anlage in richtiger Weise einfädeln zu können, wobei der Übergang von einem Anlagenteil zum nächsten je nach Anlagenausstattung und nach der Profilart des erzeugten Stranges von Hand oder automatisch erfolgt. Bei diesem Einfädelvorgang ist die Tänzerumschlingung und der Beginn der Wirksamkeit der durch den Tänzer ausgelösten Steuerung ein Problem. Ein herabhängender oder durch das Ausgleichsgewicht in die entgegengesetzte Stellung verschwenkter Tänzer gibt ein völlig falsches Signal für den nachfolgenden Antrieb, wodurch die Geschwindigkeitsvoreinstellung des Folgeantriebs verstellt und die Inbetriebnahme erschwert wird. Der Anfangsteil des erzeugten Stranges unterliegt somit vor dem korrigierenden Ausregeln unerwünschten Streckungen oder Stauchungen und wird dadurch unbrauchbar und muß als Ausschuß verworfen werden. Auch wird bei dieser üblichen Tänzeranordnung und -arbeitsweise ein automatischer Übergang des Profilanfanges von einer Teilstrecke zur nächsten fast unmöglich gemacht.

Ein weiteres Problem besteht darin, daß die Tastrollen der Tänzer an Schwenkhebeln gelagert je nach der Winkelstellung dieser Hebel eine unterschiedliche Belastung auf das durchlaufende Profil ausüben, so daß sie auf das Profil durch Dehnung oder Schrumpfung unterschiedlich je nach ihrer Stellung einwirken. Eine Verstellung des Ausgleichsgewichtes am Taster während des Betriebes ist praktisch ausgeschlossen. Denn die produzierten Profilstränge weisen je nach ihrer Art und Größe sehr unterschiedliche Querschnitte und Schrumpfwerte auf. Entsprechend müßten unterschiedliche Belastungswerte der Tastrollen an den Tänzern eingestellt werden, was sehr schwierig und zeitraubend ist und deshalb in der Praxis meist unterbleibt. Auch die Anordnung der Tänzer in Bezug auf den betreffenden Anlagenteil, sei die Anordnung horizontal durchlaufend oder mit einer Umlenkung über Kopf nach oben oder unten, bedingt jeweils andere Arbeitspunkteinstellungen des Tänzers, mit der die an diesen Anlagen arbeitenden Arbeiter überfordert sind.

Darüber hinaus kann der neutrale Arbeitspunkt, der an einem solchen Taster in Verbindung mit dessen Potentiometer eingestellt werden muß, nur für ein bestimmtes Extrosionsgut und für definierte Arbeitsbedingungen optimiert werden. Eine Veränderung dieser einmal aufgefundenen optimalen Einstellung bei anderen Profilquerschnitten, Geschwindigkeiten und Schrumpfwerten setzt reglungstechnische Kenntnisse voraus, die normalerweise von den an der Anlage beschäftigten Bedienungspersonen nicht aufgebracht werden können.

Die Erfindung vermeidet die Nachteile des Standes der Technik. Es ist die Aufgabe der Erfindung, eine einfache Möglichkeit zu schaffen, um bei den unterschiedlichen Betriebszuständen der Anlage eine programmgemäß steuerbare Tasterstellung und -belastung entsprechend den erzeugten Profilsträngen und Arbeitsbedingungen zu schaffen.

Die Erfindung löst diese Aufgabe durch eine Vorrichtung gemäß Anspruch 1.

Zweckmäßig ist es, wenn die Vorrichtung zur Erzeugung der auf den Taster wirkenden Last eine Drehvorrichtung ist, die mit der den Taster tragenden Welle verbunden ist, auf der der Taster befestigt ist. Diese Drehvorrichtung stellt den Taster programmgemäß, aber auch unabhängig von seiner jeweiligen Stellung entsprechend den jeweiligen Erforgernissen ein.

Dabei ist es zweckmäßig, wenn die Vorrichtung zur Erzeugung der auf den Taster wirkenden Last ein Servomotor, vorzugsweise in Form eines pneumatisch beaufschlagten Balges oder einer pneumatisch angetriebenen Kolben-Zylinder-Einheit ist. Derartige Vorrichtungen vermögen sehr fein einregelbare Kräfte auszuüben.

Baulich wird diese Vorrichtung sehr einfach, wenn ein Getriebe, vorzugsweise in Form einer auf ein auf der Welle montiertes Zahnrad einwirkenden Zahnstange, zwischen dem Taster und dem Servomotor angeordnet ist.

Um Fehlsteuerungen des Tasters während der Inbetriebnahme der Vorrichtung zu vermeiden ist es zweckmäßig, wenn ein zweiter Servomotor vorzugsweise in Form eines weiteren pneumatisch beaufschlagten Balges oder einer pneumatisch angetriebenen Kolben-Zylinder-Einheit für die Einstellung des Tasters in eine Wartestellung mit dem Taster koppelbar angeordnet ist. Dieser zweite Servomotor stellt dann während der Inbetriebnahme den Taster in eine Stellung, die für das Einfädeln des Anfanges des erzeugten Stranges zweckmäßig ist und in der die Steuerung nicht nachteilig beeinflußt wird.

Zweckmäßigerweise ist das Koppelglied eine auf der Welle befestigte Stange oder ein an dem Zahnrad befestigter Bolzen.

Vorteilhaft ist es, wenn in der Steuerungsvorrichtung eine Steuerungsschaltung vorgesehen ist, die programmgesteuert Verstellbefehle für den Antrieb der Vorrichtung zur Erzeugung einer auf den Taster wirkenden einstellbaren lage- und gewichtsunabhängigen Last abgibt.

Dabei ist es vorteilhaft, wenn diese Steuerungsschaltung mit ihrem Eingangskreis an den Lagegeber des Tasters angeschlossen ist.

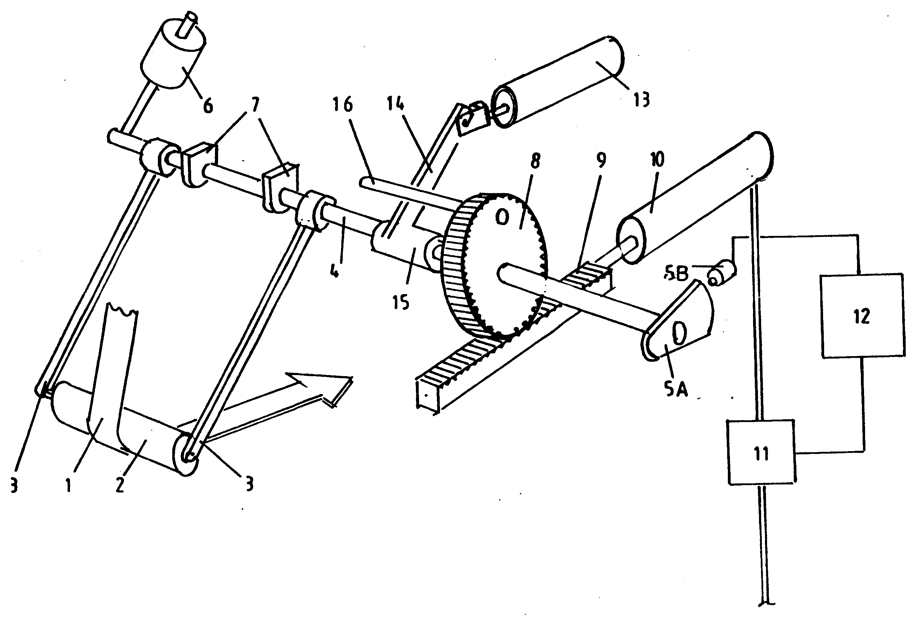

Das Wesen der Erfindung ist nachstehend anhand eines in der Zeichnung schematisch dargestellten Ausführungsbeispieles näher erläutert. Die Zeichnung zeigt in schematischer, perspektivischer Ansicht eine solche Vorrichtung, die zweckmäßigerweise am Ende einer Transportstrecke, also beispielsweise am Ende eines Förderbandes, angeordnet ist.

Der am Ende einer nicht dargestellten Förderstrecke von dieser auf eine nächste ebenfalls nicht dargestellte Förderstrecke laufende Materialstrang 1 wird von einem Taster abgetastet, der aus zwei eine Tastrolle 2 tragenden Armen 3 besteht, die auf einer Welle 4 befestigt sind, welche an ihrem einen Ende einen Lagegeber 5 trägt, der ein Potentiometer sein kann und im gezeichneten Ausführungsbeispiel durch eine Nockenscheibe 5A und einen induktiven Distanzmesser 5B realisiert ist. Am anderen Ende trägt die Welle 4 ein oder mehrere Ausgleichsgewichte 6. Auf der Welle 4, die in den Lagern 7 gelagert ist, ist ein Zahnrad 8 befestigt, welches mit einer Zahnstange 9 kämmt, die von der pneumatischen Zylinder-Kolben-Einheit hin- und herverschiebbar ist. Die diesen Servomotor 10 beaufschlagende Druckluft wird über ein Ventil 11 dem Servomotor 10 zugeführt.

Das Ventil 11 ist von der Steuerungsvorrichtung 12 gesteuert, die mit ihrem Eingangskreis an den Lagegeber 5 angeschlossen ist.

Für die Außerbetriebsetzung des Tasters 2,3 während der Inbetriebnahme der Anlage zur Behandlung des erzeugten Stranges, ist ein weiterer Servomotor 13 vorgesehen, der ebenfalls durch eine pneumatische Kolben-Zylinder-Einheit gebildet ist. Dieser Servomotor 13 wirkt mit seiner Kolbenstange auf einen Hebel 14, welcher verschwenkbar auf der Welle 4 mittels des Lagers 15 gelagert ist. Dieser Hebel 14 ist bei geeigneter Verschwenkung gegen einen Bolzen 16 verschiebbar, welcher an dem Zahnrad 8 oder einem anderen auf der Welle 4 fest angebrachten Rad befestigt ist.

Die Vorrichtung arbeitet folgendermaßen:

Während der Inbetriebnahme der Anlage ist die Tastrolle 2 in eine Stellung zu bringen, welche ein von Hand vorgenommenes oder selbsttätiges Einfädeln des erzeugten Profilstranges in die einzelnen meist über- oder untereinander liegenden Transportabschnitte erleichtert. Hierzu wird der Servomotor 13 mit Druck beaufschlagt, so daß er den Hebel 14 aus seiner Ruhestellung verschwenkt, bis dieser an dem Bolzen 16 anliegt und den Bolzen 16 durch Verdrehung des Zahnrades 8 bewegt. Durch diese Verdrehung des Zahnrades 8 werden die Welle 4 und mit ihr die Arme 3 verschwenkt, so daß die Tastrolle 2 in eine Stellung gebracht wird, die für das automatische oder von Hand vorgenommene Einfädeln des erzeugten und zu behandelnden Profilstranges vorgesehen ist. Ist der Profilstrang eingefädelt, so daß die Anlage in ihren Normalbetrieb übergehen kann, wird die Druckluft aus dem Servomotor 13 herausgelassen und dadurch der Hebel 14 in seine Ausgangsstellung zurückgezogen, wodurch sich das Zahnrad 8 in seine ursprüngliche Position zurückdreht. Während des ganzen Inbetriebnahmevorganges war der Servomotor 10 mit keinerlei Druck beaufschlagt, sein Kolben konnte sich frei in seinem Zylinder verschieben.

Im Normalbetrieb
wird der Servomotor 10 mit Druckluft beaufschlagt und er verschiebt die Zahnstange 9 in eine solche Stellung,daß das Zahnrad 8 die Welle 4 so verdreht, wie es für eine geeignete Stellung der Tastrolle 2 programmgemäß vorgesehen ist. Dabei dient die im Servomotor 10 wirksame Druckluft lediglich zu einer Entlastung der Tastvorrichtung 2, 3, die hier auftretenden, vom Servomotor 10 ausgehenden Kräfte sind nicht so groß, daß sie einen wesentlichen Einfluß auf die durch die teilweise Umschlingung der Tastrolle 2 vom Materialstrang 1 bestimmte Stellung der Tastrolle 2 nehmen. Diese Anlage der Tastrolle 2 am Materialstrang 1, - sie ist so leicht, daß eine Streckung des Materialbandes 1 nicht erfolgen kann -, bestimmt die Winkelstellung der Welle 4 und damit die Winkelstellung des Nockens 5A, dessen Oberfläche von dem induktiven Geber 5B abgetastet wird. Das im induktiven Geber 5B erzeugte Abtastsignal wird dem Eingang der Steuerungsvorrichtung 12 zugeführt, die entsprechend die Transportgeschwindigkeit des Materialstranges 1 bestimmt. Gleichzeitig wird aber in einem besonderen Steuerungskreis dieser Impuls in einen Impulswert zur Einstellung des Ventiles 11 gewandelt.

Die besonderen Vorteile der Erfindung sind:
- die Zugspannung, die die Tastrolle 2 auf den Materialstrang 1 ausüben soll, kann über produktionsspezifisch abgespeicherte Betriebsparameter aus Mikrorechnern abgerufen und über das Feinregelventil 11 vorgegeben werden, ohne mechanische Einstellarbeiten oder Veränderungen am Tastsystem 2, 3.
- Die vom Tastsystem 2, 3 aufgebrachte Kraft, die auf das Produkt wirkt, kann über den ganzen Schwenkbereich konstant eingestellt werden und ist dann nicht,wie bei reiner Gewichtsbelastung, lageabhängig veränderlich.
- Die mechanische Soll-Lage (Winkelstellung) des Abtastsystems 2, 3 kann beliebig gewählt werden, ohne mechanische Justage, da das System mechanisch arbeitspunkt-unabhängig ist.

### Liste der Bezugszeichen:

- 1: Materialstrang
- 2: Tastrolle
- 3: Armen
- 4: Welle
- 5: Lagegeber
- 6: Ausgleichsgewicht
- 7: Lager
- 8: Zahnrad
- 9: Zahnstange
- 10: Servomotor
- 11: Ventil
- 12: Steuerungsvorrichtung
- 13: Servomotor
- 14: Hebel
- 15: Lager
- 16: Bolzen

## Patentansprüche

1. Vorrichtung zum Steuern von Anlagen zur Behandlung von in Extrudern und/oder Kalandern der Kautschuk- und/oder Kunststoffverarbeitung hergestellten strangförmigen Erzeugnissen,
die über mit unterschiedlichen Geschwindigkeiten angetriebene Transportstrecken laufen,
bestehend aus mindestens einer am Ende von einer oder zwischen zwei Transportstrecken angeordneter, einen Lagegeber verstellenden, gewichtsentlasteten, mit einer an dem strangförmigen Erzeugnis anliegenden Tastrolle versehenen, um eine Welle verschwenkbaren Taster und einer dem Lagegeber nachgeschalteten Steuerungsvorrichtung für den Antrieb der Transportstrecke,
gekennzeichnet durch
eine Vorrichtung (8-12) zur Erzeugung einer auf den Taster (2, 3) wirkenden, einstellbaren, lage- und gewichts-unabhängigen Last.

2. Vorrichtung nach Anspruch 1,
dadurch gekennzeichnet,
daß die Vorrichtung (8-12) zur Erzeugung der auf den Taster (2, 3) wirkenden Last eine Drehvorrichtung ist, die mit der den Taster (2, 3) tragenden Welle (4) verbunden ist, auf der der Taster (2, 3) befestigt ist.

3. Vorrichtung nach Anspruch 1,
dadurch gekennzeichnet,
daß die Vorrichtung (8-12) zur Erzeugung der auf den Taster (2, 3) wirkenden Last ein Servomotor (10), vorzugsweise in Form eines pneumatisch beaufschlagten Balges oder einer pneumatisch angetriebenen Kolben-Zylinder-Einheit ist.

4. Vorrichtung nach Anspruch 1 und 2,
dadurch gekennzeichnet,
daß ein Getriebe (8,9),vorzugsweise in Form einer auf ein auf der Welle (4) montierten Zahnrad (8) wirkenden Zahnstange (9) zwischen dem Taster (2,3) und dem Servomotor (10) angeordnet ist.

5. Vorrichtung nach Anspruch 1,
dadurch gekennzeichnet,
daß ein zweiter Servomotor (13) vorzugsweise in Form eines weiteren pneumatisch beaufschlagten Balges oder einer pneumatisch angetriebenen Kolben-Zylinder-Einheit für die Einstellung des Tasters (2) in eine Wartestellung mit dem Taster (2, 3) koppelbar ist.

6. Vorrichtung nach Anspruch 5,
dadurch gekennzeichnet,
daß das Koppelglied eine auf der Welle (4) befestigte Stange oder ein an dem Zahnrad (8) befestigter Bolzen ist.

7. Vorrichtung nach Anspruch 1,
dadurch gekennzeichnet,
daß in der Steuerungsvorrichtung eine Steuerungsschaltung (12) vorgesehen ist, die programmgesteuert Verstellbefehle für den Antrieb der Vorrichtung zur Erzeugung der auf den Taster (2, 3) wirkenden einstellbaren lage- und gewichtsunabhängigen Last abgibt.

8. Vorrichtung nach Anspruch 7,
dadurch gekennzeichnet,
daß die Steuerungsschaltung (12) mit ihrem Eingangskreis an den Lagegeber (5B) des Tasters (2, 3) angeschlossen ist.

## Claims

1. A device for controlling apparatus for processing elongate products which are produced in extruders and/or calenders in the processing of rubber and/or plastics and which pass across transport links driven at different speeds, consisting of at least one feeler which is arranged at the end of one transport link or between two transport links, adjusts a position sensor, is relieved of weight load, is provided with a feeler roller bearing against the elongate product, and can be swivelled about a shaft, and of a control device, arranged following the position sensor, for driving the transport link, characterised by a device (8-12) for the generation of an adjustable, position- and weight-independent load which acts on the feeler (2, 3).

2. A device as claimed in Claim 1, characterised in that the device (8-12) which generates the load acting on the feeler (2, 3) is a rotating device which is connected to the shaft (4) which bears the feeler (2, 3) and on which the feeler (2, 3) is attached.

3. A device as claimed in Claim 1, characterised in that the device (8-12) which generates the load acting on the feeler (2, 3) is a servomotor (10), preferably in the form of a pneumatically controlled bellows or a pneumatically driven piston-cylinder unit.

4. A device as claimed in Claim 1 and 2, characterised in that a gear (8, 9), preferably in form of a rack (9) acting on a gearwheel (8) mounted on the shaft (4), is arranged between the feeler (2, 3) and the servomotor (10).

5. A device as claimed in Claim 1, characterised in that a second servomotor (13), preferably in the form of a further, pneumatically controlled bellows or a pneumatically driven piston-cylinder unit, for adjusting the feeler (2) into a waiting position can be coupled to the feeler (2, 3).

6. A device as claimed in Claim 5, characterised in that the coupling element is a rod attached to the shaft (4) or a pin attached to the gearwheel (8).

7. A device as claimed in Claim 1, characterised in that a control circuit arrangement (12) is provided in the control device, which control circuit arrangement emits adjusting commands in programme-controlled fashion for driving the device which generates the adjustable, position- and weight-independent load which acts on the feeler (2, 3).

8. A device as claimed in Claim 7, characterised in that the control circuit arrangement (12) is connected by its input circuit to the position sensor (5B) of the feeler (2, 3).

## Revendications

1. Dispositif pour commander des installations pour le traitement de produits en forme de boudins fabriqués dans des extrudeuses et/ou des calandres utilisées pour le traitement du caoutchouc et/ou des matières plastiques,
qui circulent dans des sections de transport entraînées à des vitesses différentes,
constitué par au moins un palpeur, qui est disposé à l'extrémité d'une section de transport ou entre deux sections de transport, déplace un capteur de position, est pourvu d'un galet de palpage appliqué contre le produit en forme de boudin et peut pivoter autour d'un arbre, et dont le poids est compensé, et un dispositif de commande, qui est branché en aval du capteur de position et est utilisé pour l'entraînement de la section de transport,
caractérisé par
un dispositif (8-12) pour produire une charge réglable, qui agit sur le palpeur (2,3) et est indépendante de la position et du poids.

2. Dispositif suivant la revendication 1, caractérisé en ce que le dispositif (8-12) servant à produire la charge agissant sur le palpeur (2,3) est un dispositif d'entraînement en rotation, qui est raccordé à l'arbre (4) qui porte le palpeur (2,3) et sur lequel est fixé ce dernier.

3. Dispositif selon la revendication 1, caractérisé en ce que le dispositif (8-12) servant à produire la charge agissant sur le palpeur (2,3) est un servomoteur (10), réalisé de préférence sous la forme d'un soufflet chargé pneumatiquement ou d'une unité à piston et cylindre entraînée pneumatiquement.

4. Dispositif selon les revendications 1 et 2, caractérisé en ce qu'un mécanisme (8,9), réalisé de préférence sous la forme d'une crémaillère (9) agissant sur un pignon (8) monté sur l'arbre (4), est disposé entre le palpeur (2,3) et le servomoteur (10).

5. Dispositif selon la revendication 1, caractérisé en ce qu'un second servomoteur (13), réalisé de préférence sous la forme d'un autre soufflet pouvant être chargé pneumatiquement ou d'une unité à piston et cylindre entraînée pneumatiquement pour le réglage du palpeur (2), peut être accouplé au palpeur (2,3), dans une position d'attente.

6. Dispositif selon la revendication 5, caractérisé en ce que l'organe de couplage est une barre fixée à l'arbre (4) ou un axe fixé à la crémaillère (8).

7. Dispositif selon la revendication 1, caractérisé en ce que dans le dispositif de commande est prévu un circuit de commande (12), qui, d'une manière commandée par un programme, délivre des instructions de réglage pour l'entraînement du dispositif servant à produire la charge réglable, qui agit sur le palpeur (2,3) et est indépendante de la position et du poids.

8. Dispositif selon la revendication 7, caractérisé en ce que le circuit de commande (12) est raccordé, par son circuit d'entrée, au capteur de position (5B) du palpeur (2,3).
